# EUROPEAN PATENT APPLICATION

(11) **EP 4 693 140 A1**
(43) Date of publication of application: **11.02.2026**
(21) Application number: 25163990.2
(22) Date of filing: 14.03.2025
(51) Int. Cl.: G06Q 20/12, G06Q 20/32

(54) **METHODS, APPARATUSES, AND DEVICES FOR DISPLAYING MEMBER LOGIN PAGE, AND MEDIA**

(30) Priority: 05.08.2024 CN 202411069785
(71) Applicant: Advanced Nova Technologies (Singapore) Holding Pte. Ltd., Singapore 189773 (SG)
(72) Inventor: LI, Yanxin, 189773 Singapore (SG); SHI PAN, Junnan, 189773 Singapore (SG); ZHENG, Jie, 189773 Singapore (SG); WANG, Li, 189773 Singapore (SG)
(74) Representative: Fish & Richardson P.C.

(57) **Abstract**

Embodiments of this specification disclose methods, apparatuses, and devices for displaying a member login page, and media. The solutions can include: A first device obtains tag information of an NFC tag of a second device by way of near field communication, where the tag information includes first information for invoking a target application and second information for triggering a member login procedure; invokes the target application in the first device based on the first information; uses the target application to send a page information acquisition request to a server based on the second information; and obtains member login page information fed back by the server, and displays a member login page.

## Description

### TECHNICAL FIELD

This application relates to the field of computer technologies, and in particular, to methods, apparatuses, and devices for displaying a member login page, and media.

### BACKGROUND

To provide better services for users, increasingly more services use member mechanisms. For example, merchants offer various benefits or preferential activities to members. For another example, some service providers provide member users with richer reading information, video information, audio information, etc.

How to provide a more convenient member login manner is a technical problem to be urgently alleviated.

### SUMMARY

Embodiments of this specification provide methods, apparatuses, and devices for displaying a member login page, and media, to alleviate a problem that operations are cumbersome in an existing member login method.

To alleviate the above-mentioned technical problem, some embodiments of this specification provide the following solutions:

A method for displaying a member login page provided in the embodiments of this specification includes:

A first device obtains tag information of an NFC tag of a second device by way of near field communication, where the tag information includes first information for invoking a target application and second information for executing a member login procedure; invokes the target application in the first device based on the first information; uses the target application to send a page information acquisition request to a server based on the second information; and obtains member login page information fed back by the server, and displays a member login page.

A method for displaying a member login page provided in the embodiments of this specification includes: obtaining a page information acquisition request sent by a first device, where the page information acquisition request is generated by the first device based on tag information of an NFC tag of a second device obtained by way of near field communication, and the tag information includes first information for invoking a target application and second information for executing a member login procedure; and sending member login page information to the first device based on the page information acquisition request, so that the first device displays a member login page.

An apparatus for displaying a member login page provided in the embodiments of this specification includes: an information acquisition module, configured to obtain tag information of an NFC tag of a second device by way of near field communication, where the tag information includes first information for invoking a target application and second information for triggering a member login procedure; an application invoking module, configured to invoke the target application in the first device based on the first information; a request sending module, configured to use the target application to send a page information acquisition request to a server based on the second information; and a page display module, configured to obtain member login page information fed back by the server, and display a member login page.

An apparatus for displaying a member login page provided in the embodiments of this specification includes: a request acquisition module, configured to obtain a page information acquisition request sent by a first device, where the page information acquisition request is generated by the first device based on tag information of an NFC tag of a second device obtained by way of near field communication, and the tag information includes first information for invoking a target application and second information for executing a member login procedure; and a page information sending module, configured to send member login page information to the first device based on the page information acquisition request, so that the first device displays a member login page.

A device for displaying a member login page provided in the embodiments of this specification includes: at least one processor; and a storage communicatively connected to the at least one processor, where the storage stores instructions executable by the at least one processor, and the instructions are executed by the at least one processor, so that the at least one processor is capable of performing the method for displaying a member login page.

A computer-readable medium provided in the embodiments of this specification stores computer-readable instructions, and the computer-readable instructions can be executed by a processor to implement the method for displaying a member login page.

Embodiments of this specification can achieve the following beneficial effects: The first device obtains the tag information of the NFC tag of the second device by way of near field communication, and the first information and the second information in the tag information can be used to display the member login page. In this way, a user can move the first device in proximity to the second device to display the member login page, making it more convenient for the user to log in as a member.

### BRIEF DESCRIPTION OF DRAWINGS

To describe the technical solutions in some embodiments of this specification or in the existing technology more clearly, the following briefly describes the accompanying drawings needed for describing the embodiments or the existing technology. Clearly, the accompanying drawings in the following descriptions merely show some embodiments of this application, and a person of ordinary skill in the art can still derive other drawings from these accompanying drawings without creative efforts.
FIG. 1 is a schematic diagram illustrating an application scenario of a method for displaying a member login page, according to an embodiment of this specification;
FIG. 2 is a schematic flowchart illustrating a method for displaying a member login page, according to an embodiment of this specification;
FIG. 3 is a swim lane diagram illustrating a method for displaying a member login page, according to an embodiment of this specification;
FIG. 4 is a schematic diagram illustrating a member authorization and login page, according to an embodiment of this specification;
FIG. 5 is a schematic diagram illustrating a member login result page, according to an embodiment of this specification;
FIG. 6 is a schematic diagram illustrating another member login result page, according to an embodiment of this specification;
FIG. 7 is a schematic diagram illustrating another member authorization and login page, according to an embodiment of this specification;
FIG. 8 is a schematic diagram illustrating a payment result page, according to an embodiment of this specification;
FIG. 9 is a schematic diagram illustrating a payment confirmation page, according to an embodiment of this specification;
FIG. 10 is a schematic diagram illustrating a login response page, according to an embodiment of this specification;
FIG. 11 is a schematic diagram illustrating a member prompt page, according to an embodiment of this specification;
FIG. 12 is a schematic diagram illustrating a payment response page, according to an embodiment of this specification;
FIG. 13 is a schematic flowchart illustrating a method for displaying a member login page, according to an embodiment of this specification;
FIG. 14 is a schematic diagram illustrating a structure of an apparatus for displaying a member login page corresponding to FIG. 2, according to an embodiment of this specification;
FIG. 15 is a schematic diagram illustrating a structure of an apparatus for displaying a member login page corresponding to FIG. 13, according to an embodiment of this specification; and
FIG. 16 is a schematic diagram illustrating a structure of a device for displaying a member login page, according to an embodiment of this specification.

### DESCRIPTION OF EMBODIMENTS

To make the objectives, technical solutions, and advantages of one or more embodiments of this specification clearer, the following clearly and comprehensively describes the technical solutions in the one or more embodiments of this specification with reference to corresponding accompanying drawings and specific embodiments of this specification. Clearly, the described embodiments are merely some but not all of the embodiments of this specification. All other embodiments obtained by a person of ordinary skill in the art based on the embodiments of this specification without creative efforts shall fall within the protection scope of the one or more embodiments of this specification.

The following describes in detail the technical solutions provided in the embodiments of this specification with reference to the accompanying drawings.

In a related technology, if a user wants to log in or register as a member, one way is for the user to first locate a corresponding web page, client device, or applet, then locate a member portal, and then enter some verification information such as an account and a password before logging in as a member. Another way is for the user to use a bar code scanning capability of a certain client device in a mobile phone to scan a member code provided by a merchant, to log in as a member. In these ways, the user needs to first locate a web page, a client device, or an applet, or open a corresponding client device to scan a code before a member login page is displayed, and operations are cumbersome.

To alleviate deficiencies of the existing technology, this solution provides the following embodiments:

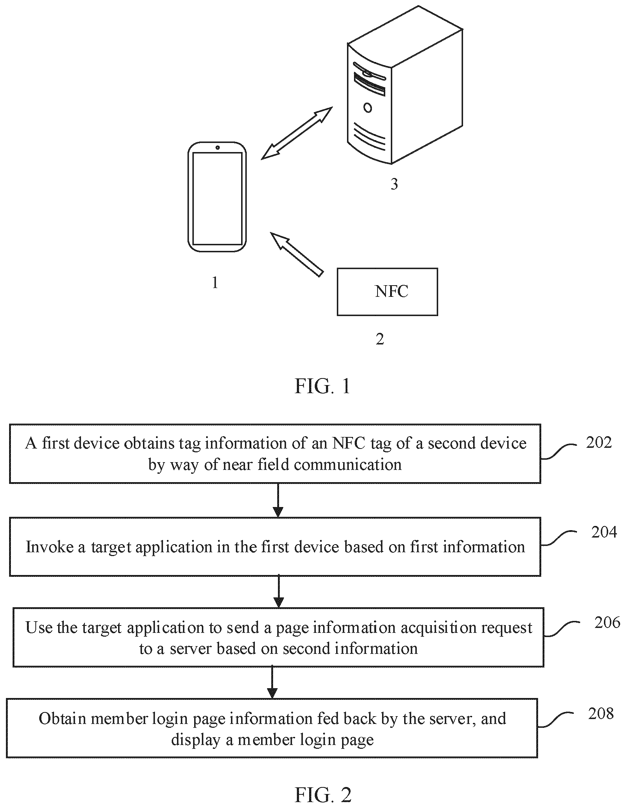

FIG. 1 is a schematic diagram illustrating an application scenario of a method for displaying a member login page, according to an embodiment of this specification. As shown in FIG. 1, the solution can include a first device 1, a second device 2, and a server 3. The first device 1 can use a near field communication function to obtain tag information of an NFC tag of the second device 2 by approaching the NFC tag, for example, by abutting or touching the NFC tag. The first device 1 can use the tag information to invoke a target application in the first device, and display, in the target application, member login page information obtained from the server 3.

The following specifically describes, with reference to the accompanying drawings, a method for displaying a member login page provided in the embodiments of this specification.

FIG. 2 is a schematic flowchart illustrating a method for displaying a member login page, according to an embodiment of this specification. From a program perspective, a procedure can be executed by a program or an application client device installed in a first device. From a hardware perspective, the procedure can be executed by the first device with a near field communication function. The first device can be a mobile phone, a smartwatch, a smart band, a portable computer, a wearable smart device, etc., and can also be another mobile terminal device. A specific type of the device is not limited here.

As shown in FIG. 2, the procedure can include the following steps:
Step 202: The first device obtains tag information of an NFC tag of a second device by way of near field communication.

The tag information includes first information for invoking a target application and second information for triggering a member login procedure. The second device can be a device associated with the NFC tag. For example, the NFC tag can be located on the second device, or the NFC tag can be separated from the second device and connected to the second device in a wired or wireless manner. The first device has a near field communication (NFC) function, and can serve as an NFC card reader to obtain the tag information of the NFC tag of the second device. The NFC tag can also be referred to as an NFC card, and has components such as an NFC chip and a coil.

In this specification, the first device can serve as a card reader, and send a signal in a low power card detection (LPCD) mode when an NFC switch is turned on. Alternatively, the LPCD mode is mixed with active card detection. When the first device approaches the NFC tag, for example, touches or abuts the second device, a tag coil in the NFC tag affects the LPCD signal of the first device in terms of an amplitude or a phase. The first device can determine, based on such impact, that there is a tag nearby, and then initiate a query to enter an interaction process, which can be specifically command exchange and data exchange. For example, the first device can obtain the information in the NFC tag. For a specific NFC interaction process, references can be made to a related technology. Details are omitted here for simplicity.

The first information and the second information can be a character or a character string in a predetermined format, for example, can be link information, such as a universal resource locator (URL) starting with http or https; or can be a character or a character string in another form that can be recognized by the first device. The first information and the second information can be information in a same character string, or can be separate characters or character strings, and there is no specific limitation.

Step 204: Invoke the target application in the first device based on the first information.

The first information is information for invoking the target application, and can be specifically an identifier that represents the target application, such as a package name, a package signature, etc. of the application, or can be other information agreed upon with the first device. The first device can start the target application based on the identifier. The target application can be an application client device APP, an applet, a system application, etc. In actual applications, an opening system (OS) of the first device can invoke a corresponding target application based on an application package name.

Step 206: Use the target application to send a page information acquisition request to a server based on the second information.

The second information is information for triggering the member login procedure. An operating system of the first device can provide the second information for the target application, and the target application can trigger the member login procedure based on the second information. It can be understood that a client device application of the target application can execute, based on the second information, a procedure related to member login. In an implementation, the second information can include information about a redirection page, such as information in a URL format. After the first device starts the target application, the target application can send the page information acquisition request to the server based on the second information, and can also receive information fed back by the server.

Step 208: Obtain member login page information fed back by the server, and display a member login page.

The server is a server that is capable of providing a service for the target application. The server can determine the corresponding member login page information based on the page information acquisition request sent by the target application, and feed back the member login page information to the target application.

In actual applications, different merchants or member service providers can specify, based on actual needs, member login pages that satisfy service needs. Optionally, the second information can include identification information of a member service provider, such as identification information of a merchant served by the second device. The server can feed back corresponding member login page information to the first device based on the identification information, and the first device can display a corresponding member login page.

It should be understood that in the method described in one or more embodiments of this specification, sequences of some steps can be exchanged with each other based on actual needs, or some steps can be omitted or deleted. For example, if the operating system of the first device is capable of recognizing and responding to the member login procedure represented by the second information, invoking the target application in the first device can be skipped.

In the method shown in FIG. 2, the first device obtains the tag information of the NFC tag of the second device by way of near field communication, and the first information and the second information in the tag information can be used to display the member login page. In this way, a user can move the first device in proximity to the second device to display the member login page, making it more convenient for the user to log in as a member.

The above-mentioned member login page in the embodiment of this specification can be one page or a plurality of associated pages. In an implementation, if the user of the first device is already a member of the member service provider, the first device can display a login result page after obtaining the NFC tag information. If the user is not yet a member of the member service provider, a member authorization and login page can be displayed to prompt the user to provide authorization to become a member, so that the user can be determined as a member after authorization is obtained from the user. On the basis of the user authorizing the first device or the server to store related member information, if the user logs in as a member again next time, after the user uses the first device to abut the second device, the first device can directly display a member login result page, instead of displaying the member authorization and login page.

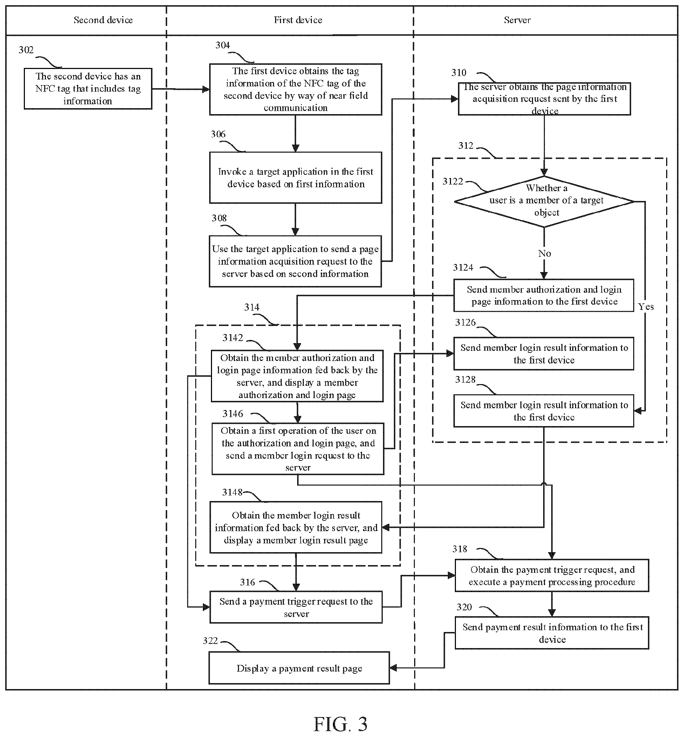

To more clearly describe the method for displaying information about a member login page provided in the embodiments of this specification, FIG. 3 is a swim lane diagram illustrating a method for displaying a member login page, according to an embodiment of this specification. As shown in FIG. 3, the method can include the following steps:
Step 302: A second device has an NFC tag that includes tag information.

In actual applications, the second device can be a device used by a member service provider or a device connected to a management system of the member service provider. The member service provider can burn the tag information to the NFC tag of the second device based on actual service needs. For example, the tag information can be burned to the NFC tag by using the second device. Member service providers can be objects that provide member services, for example, some merchants with member services, such as supermarkets, shopping malls, bookstores, restaurants, hospitals, and social service organizations; or can be some public-welfare or non-public-welfare organizations, such as reading clubs and sporting clubs.

Step 304: A first device obtains the tag information of the NFC tag of the second device by way of near field communication.

The tag information can include first information for invoking a target application and second information for triggering a member login procedure.

Step 306: Invoke the target application in the first device based on the first information.

Step 308: Use the target application to send a page information acquisition request to a server based on the second information.

In actual applications, different member service providers can correspond to different member login pages. Optionally, in an implementation, the using the target application to send a page information acquisition request to a server based on the second information can specifically include: obtaining scenario parameter information from the second information; generating a page information acquisition request based on the scenario parameter information; and sending the page information acquisition request to the server.

The scenario parameter information can represent parameter information related to a member login scenario, and can specifically include at least one of identification information of a target object that provides a member service, identification information of the second device, and service identification information that represents a member login service to be processed. The scenario parameter information can also include token information, etc. generated by using a token mechanism. The page information acquisition request can include the scenario parameter information, or include identification information corresponding to the scenario parameter information, so that the server executes a corresponding member login procedure based on parameter information included in the page information acquisition request.

Step 310: The server obtains the page information acquisition request sent by the first device.

The page information acquisition request is a request for the server to feed back related information about member login.

Step 312: Send member login page information to the first device based on the page information acquisition request.

Step 314: The first device obtains member login page information fed back by the server, and displays a member login page.

In actual applications, for users in different states, the server can feed back different page information. For example, if a user has not previously registered as or provided authorization to register as a member of a target object corresponding to the second device in the NFC communication manner, the server can feed back a page that prompts the user to register as a member or provide authorization to become a member. If the user is already a member of the target object or has previously provided authorization to become a member in the NFC communication manner, that is, if there is record information of the user as a member in the server, there is no need to feed back the page that prompts the user to register as a member or provide authorization to become a member, and a login result page can be fed back to the first device, so that the user can know whether the user has logged in as a member.

In an implementation, the page information acquisition request can include user identification information of the first device, for example, device identification information of the first device, or user identification information of the user in the first device or the target application, such as a user identification (UID), a mobile phone number, an email account, an application account, or a social account. Before sending the member login page information to the first device, the server can further perform step 3122: Determine, based on the user identification information, whether a user of the first device is a member of a target object, to obtain a determining result.

Optionally, if the determining result indicates that the user is not a member of the target object, the server can further perform step 3124: Send member authorization and login page information to the first device.

Correspondingly, the obtaining member login page information fed back by the server, and displaying a member login page in above-mentioned step 314 performed by the first device can specifically further include step 3142: Obtain member authorization and login page information fed back by the server, and display a member authorization and login page.

The member authorization and login page information is page information fed back by the server after determining that a user of the first device is not a member of a target object.

The member login page can include at least one of identification information of a target object corresponding to the member login page, information indicating content that the user needs to authorize, a control for confirming member login, a control for exiting the member login, a control for using a member payment method, and a control for using a non-member payment method.

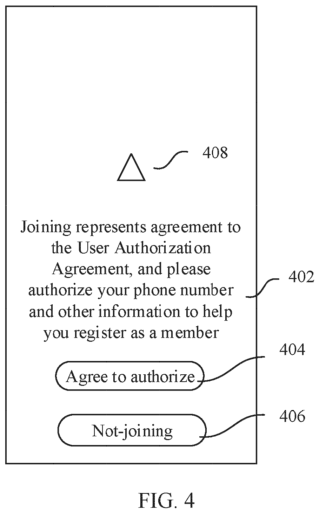

FIG. 4 is a schematic diagram illustrating a member authorization and login page, according to an embodiment of this specification. As shown in FIG. 4, the member authorization and login page can include information 402 indicating content that the user needs to authorize, and the user can also view specific authorization agreement content. The member authorization and login page can further include a control 404 for confirming member login. If the user taps on the control, the target application can use information such as a phone number of the user to register the user as a member of the target object. For example, the target application can send a member registration request including user information to a server or a system for managing member information. The server or the system can record the user information of the user, and can further record information such as member benefits enjoyed by the user. The server for managing member information can be the same server as the server in the embodiments of this specification, or can be a different server.

As shown in FIG. 4, the member authorization and login page can further include a control 406 for exiting the member login. If the user taps on the control, it can indicate that the user does not agree to log in or register as a member, and the first device can terminate a member login procedure and exit the member authorization and login page. The member authorization and login page can further include identification information 408 of the target object, etc.

Optionally, the method in the embodiment of this specification can further include step 3146: The first device obtains a first operation of the user on the member authorization and login page, and sends a member login request to the server.

The first operation is an operation that represents agreement of the user to become a member of the target object. Specifically, the first operation can be a first operation on a first control of the member authorization and login page, or an operation performed based on a predetermined operation instruction. The first operation can be a substantive operation or a non-substantive operation of an inaction type. For example, in a process of displaying prompt information to cancel authorization in a countdown, if the user does not perform an operation to cancel authorization of member login or registration, it can indicate that the user agrees to authorize member login or registration.

Correspondingly, the server can perform step 3126: Obtain a member login request sent by the first device.

The member login request is generated by the first device based on the first operation of the user on the first control of the member authorization and login page. The server can execute a member registration or login procedure based on the member login request sent by the first device, and record the user as a member of the target object or a member in a logged-in state.

Step 3128: Send member login result information to the first device.

The server can generate the member login result information based on a member login result of the user, and feed back the member login result information to the first device. In actual applications, the server can interact with a device or a system of a member service provider to complete user member login or registration. For example, the server can provide obtained user information for the device or the system of the member service provider, so that the member service provider can mark the user as a member user. Member registration or login can alternatively be completed independently by the server. There is no specific limitation or description on a specific member registration or login process here, and references can be made to the related implementation method.

Correspondingly, the first device can further perform step 3148: Obtain member login result information fed back by the server, and display a member login result page.

In an implementation, if the determining result indicates that the user is a member of the target object, that is, after determining that the user is already a member user, the server can send member login result information to the first device, and the sending member login page information to the first device in above-mentioned step 312 can specifically include above-mentioned step 3128: Send member login result information to the first device.

Correspondingly, the obtaining member login page information fed back by the server, and displaying a member login page in above-mentioned step 314 performed by the first device can specifically include above-mentioned step 3148: Obtain member login result information fed back by the server, and display a member login result page. The member login result information is page information fed back by the server after determining that a user of the first device is a member of a target object.

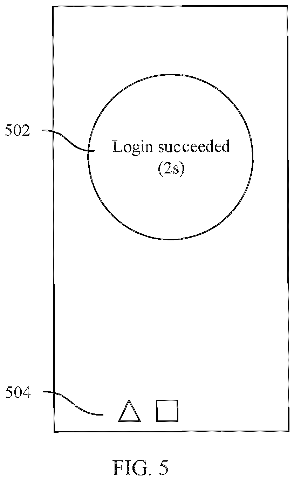

FIG. 5 is a schematic diagram illustrating a member login result page, according to an embodiment of this specification. As shown in FIG. 5, the page can include information 502 indicating a member login result. In actual applications, if login is successful, the login result page can display information indicating successful login, such as Login succeeded. If login fails, information indicating login failure can be displayed, such as Login failed. Information about a reason for login failure can also be displayed, such as Login timeout. If login fails, information prompting the user to log in again, etc. can also be displayed.

As shown in FIG. 5, the page can further include information 504 about a member service provider, such as a name or logo information of a merchant, and can further include identification information of the target application, etc. The page can further include identification information of near field communication, for example, information with words such as NFC.

In actual applications, the login result page can be exited automatically. As shown in FIG. 5, there is countdown information of words "2s", and after the countdown ends, the login result page can be exited automatically. The login result page can alternatively be exited based on an operation of the user. For example, the login result page can include an operation control, and the user can tap on the control to exit the page or implement redirection to another page.

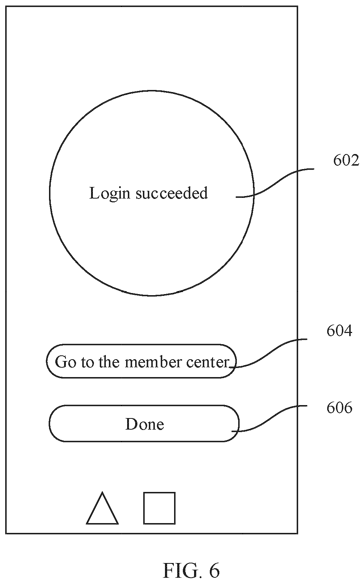

FIG. 6 is a schematic diagram illustrating another member login result page, according to an embodiment of this specification. As shown in FIG. 6, the page can include information 602 indicating a member login result. The page can further include a control 604 for entering a member service page, and a control 606 for exiting the current page. If the user taps on the control 604, the first device can implement redirection from the page to the member service page that includes member service information. The page can include information about member benefits that the user can enjoy, such as coupons, user member points, and a user member level. If the user taps on the control 606, the member login result page can be exited.

In actual applications, at some merchants that provide member services, a member payment method can also be used for transactions. Users who use the member payment method can enjoy some member benefits, such as discounted member prices, coupons, and member points. The method for displaying a member login page provided in the embodiment of this specification can also be applied to a payment application scenario.

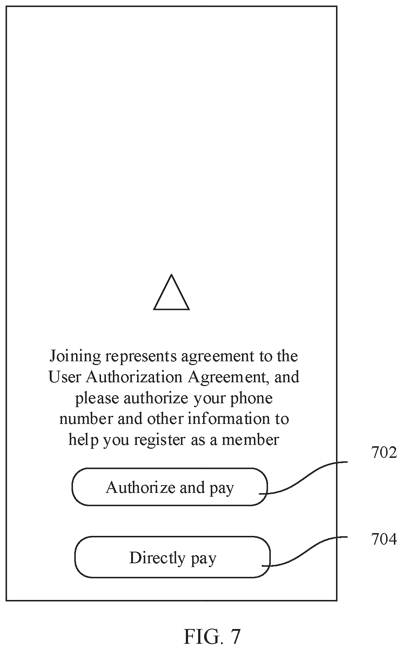

FIG. 7 is a schematic diagram illustrating another member authorization and login page, according to an embodiment of this specification. As shown in FIG. 7, the member authorization and login page can include a control 702 for agreeing to register as a member and use a member payment method. If the user performs an operation on the control, it indicates that the user agrees to register as a member and agrees to make payment, and the user can enjoy benefits of member payment. One operation performed by the user on the control 702 can trigger a member registration and login procedure and a payment processing service procedure.

As shown in FIG. 7, the member authorization and login page can further include a control 704 for using a non-member payment method. If the user performs an operation on the control, it indicates that the user does not authorize registration as a member but agrees to make payment, and the payment processing service procedure can be triggered. In actual applications, the member authorization and login page can further include a control for exiting the member login result page, or a control for the user to cancel or disagree with member login.

It can be understood that the above is only a page example, and specific page content can be specified based on actual needs, and is not specifically limited here.

Optionally, as shown in FIG. 3, the method in the embodiment of this specification can further include step 316: Send a payment trigger request to the server.

The payment trigger request can be generated by the first device based on a predetermined operation of the user on the member login result page. The predetermined operation can represent an operation of the user to make payment, and can represent agreement of the user to use a non-member payment method or agreement of the user to use a member payment method. In the above-mentioned member authorization and login page shown in FIG. 7, regardless of whether the user performs an operation on the control 702 for agreeing to register as a member and use a member payment method or performs an operation on the control 704 for using a non-member payment method, the first device can send a payment processing request to the server.

Optionally, the server can further perform step 318: Obtain the payment trigger request, and execute a payment processing procedure.

The server can further perform step 320: Send payment result information to the first device.

The server includes a program for processing a payment request of the user. After obtaining the payment trigger request sent by the first device, the server can execute a corresponding payment processing procedure. For example, the payment trigger request includes information about both parties in a transaction and information about an amount of resources to be traded, and the server can transfer resources of a payer to a corresponding account of a payee based on the request. For another example, the server can further send user information of the first device to a system or a device of a counterparty, so that the counterparty can generate information such as an order and send the information to the server. The server can also process a payment transaction between the first device and the counterparty based on the order information provided by the counterparty.

Transaction result information can be result information obtained by the server by processing a payment service, and can be information indicating transaction success, or can be information indicating transaction failure. For a specific process of processing the payment service by the server, references can be made to a related technology. Details are omitted here for simplicity.

Correspondingly, the first device can further perform step 322: Display a payment result page.

The first device can obtain payment result information fed back by the server, and display a payment result page based on the payment result information. The payment result page can include the payment result information fed back by the server.

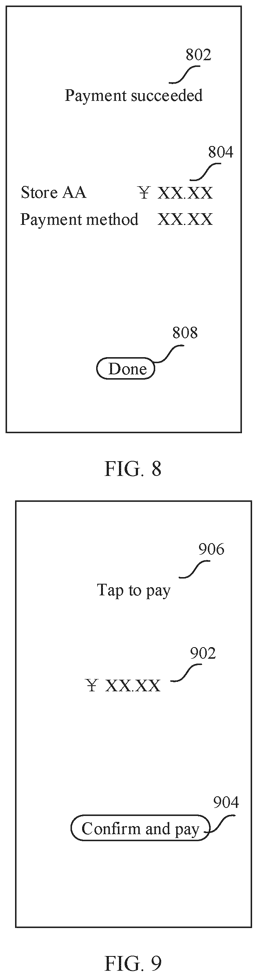

FIG. 8 is a schematic diagram illustrating a payment result page, according to an embodiment of this specification. As shown in FIG. 8, the transaction result page can include payment result information 802, for example, payment success or payment failure; can further include payment information 804, for example, a payment amount, a payment method, a transaction party, or discount information; and can further include a control 806 such as a "Done" control used to close the transaction result page. In actual applications, specific content and a specific format of the transaction result page can be specified based on actual needs, and are not specifically limited here.

The second information in the tag information in the embodiment of this specification can include information for triggering a member login procedure, and can further include information for triggering a payment service processing procedure, such as some predetermined characters. The first device can send at least some of the information in the tag information to the server, and the server can trigger the payment service processing procedure based on some predetermined characters in a case in which it is determined that the user is a member or is not a member.

In an implementation, the first operation of the user on the member authorization and login page obtained by the first device can further represent an operation of the user to make payment in a member payment method. Optionally, the first device can further perform the following step: sending a first payment trigger request to the server, so that the server executes a corresponding payment processing procedure.

The first payment trigger request can represent a payment trigger request for using the member payment method to make payment, and the server can process the request based on a member payment link.

In actual applications, to simplify user operations, the first payment trigger request can also be generated based on the first operation of the user on the member authorization and login page. That is, when the user performs the first operation once, member registration and login can be triggered, and a payment procedure can also be triggered. Based on the first operation, the first device can send the member login request to the server, and can also send the first payment trigger request to the server. The two requests can be sent as one request to the server, or can be separately sent to the server.

Correspondingly, the server can further perform processing steps for the first payment trigger request. Optionally, the first device can further perform the following steps: obtaining a first payment trigger request sent by the first device; and based on the first payment trigger request, sending first transaction information of the user to a payment system of a transaction party opposite to the first device, so that the payment system processes a payment service for the user based on the first transaction information, where the first transaction information includes member information of the user and transaction identification information that represents transaction account information of the user.

The payment system can represent a payment service management system of the other party conducting a transaction with the first device, and can also be understood as a payment system of the counterparty, which can also be referred to as a cash register system, such as a cash register of a merchant. The payment system can also be a payment device connected to the cash register system of the merchant, such as the second device. The payment system can send a payment request to the server based on the obtained transaction information, and the server performs payment processing and can further feed back a transaction result to both parties in the transaction. For example, the payment system is a cash register system such as a cash register, a cash register device, or a self-service payment device disposed at a place such as a supermarket or a shopping mall. The cash register system can determine, based on the transaction identification information, a user payment account used to conduct the transaction. If the cash register system is used for collection, the user payment account can represent a payment account; and if the cash register system is used for payment, the user payment account can represent a collection account. The cash register system can also correspond to a transaction account. The cash register system can generate a transaction request based on the obtained user payment account and the transaction account corresponding to the cash register system, and send the transaction request to the server. The server can process the transaction request. For example, the server can deduct corresponding resources from the user payment account, and add the resources to the transaction account corresponding to the cash register system. After processing is completed, the server can feed back payment result information to the server. For a specific transaction processing procedure, references can be made to a related technology. The cash register system can also process a transaction based on an existing processing procedure. Details are omitted here for simplicity.

In actual applications, the server can directly send the first transaction information to the payment system of the transaction party opposite to the first device, or send the first transaction information to the payment system by using the second device, where the second device can send the first transaction information to the payment system in a wired or wireless manner. If the payment system can also read NFC information, the second device can burn the obtained first transaction information to the NFC tag, and then the payment system uses an NFC reading function to read the information.

The transaction identification information can be used to determine a user transaction account in the first device. If the tag information included in the NFC tag represents a payment procedure for making payment, the account can be a payment account, and if the tag information included in the NFC tag represents a payment procedure for making collection, the account can be a collection account. Implementations are not specifically limited here. In actual applications, the target application can be a terminal application with a payment function. The user transaction account can also be a user account for logging in to the terminal application.

In actual applications, the transaction identification information can be generated by the server based on the payment trigger request sent by the first device. The first device can request, based on actual transaction needs, the server to generate the transaction identification information. There can be different transaction identification information in different payment processes.

In an implementation, the first device can send a payment trigger request including the user identification information in the first device to the server, and the server can generate transaction identification information for the user of the first device based on the obtained user identification information.

The user identification information can be a user ID, or can be identification information that can be used to determine the user transaction account, for example, a device identifier of the mobile terminal device or a user application identifier of the user in the terminal application. The server can determine the user transaction account based on the user identification information, and generate transaction identification information that has a correspondence with the user transaction account, to subsequently process a payment transaction by using the user transaction account based on the transaction identification information.

In actual applications, the transaction identification information can also include a character string representing a payment code, a character string representing a transaction order number, etc., and the server can process the transaction between the two transaction parties based on the transaction identification information. Specifically, the transaction identification information can be a character string, which can be a character string that can be recognized by a server configured to process a payment service, and is a character string satisfying a payment rule of a payment application, for example, a character string starting with 28, or a character string starting with 25, 30, etc. A length of the character string can be 16 characters to 24 characters, or can be characters of another length that satisfies needs. A specific form of the character string is not specifically limited here. For related content of the transaction identification information, references can be made to related descriptions in the above-mentioned embodiments.

The member information of the user can include user information used during registration as a member, for example, information such as a phone number and a name, and can also include member identification information generated by the server for the member user, for example, information such as a card number of a member card and a member user number. For details, references can be made to a related technology. There is no specific limitation or description here.

In the embodiment of this specification, after determining that the user uses the member payment method, the server sends the transaction identification information and the member information of the user of the first device to the payment system. The transaction identification information and the member information can be included in one piece of information and sent to the payment system, or can be separately sent to the payment system.

In the embodiment of this specification, the member authorization and login page can include a control for using a non-member payment method. Optionally, the first device in the embodiment of this specification can further perform the following steps: obtaining a second operation of the user on a second control of the member authorization and login page, where the second operation is an operation that represents agreement of the user to make payment in a non-member payment method; and sending a second payment trigger request to the server, so that the server executes a corresponding payment processing procedure.

The second payment trigger request can represent a payment trigger request for using the non-member payment method to make payment, and the server can process the request based on a non-member payment link.

Correspondingly, the server can further perform the following steps: obtaining the second payment trigger request sent by the first device, where the second payment trigger request is generated by the first device based on the second operation of the user on the second control of the member authorization and login page, and the second operation is an operation that represents agreement of the user to make payment in a non-member payment method; and based on the second payment trigger request, sending second transaction information of the user to a payment system associated with the second device, so that the payment system processes a payment service for the user based on the second transaction information, where the second transaction information includes transaction identification information that represents transaction account information of the user.

For the transaction identification information and the payment system, references can be made to the content in the above-mentioned embodiment. For a specific process of sending the second transaction information to the payment system in this embodiment, references can be made to the content of sending the first transaction information to the payment system in the above-mentioned embodiment. Details are omitted here for simplicity.

If the user does not agree to register as a member or chooses the non-member payment method to make payment, the server does not need to send the member information of the user to the payment system, and can send the transaction identification information that represents the transaction account information of the user to the payment system.

The server can process a payment service based on a request of the payment system and feed back payment result information. Optionally, the server in the embodiment of this specification can perform the following steps: obtaining a payment processing request generated by the payment system based on the transaction identification information; executing a payment procedure based on the payment processing request, and obtaining payment result information; and sending the payment result information to the first device.

The payment result information can be result information indicating payment failure, or can be result information indicating payment success. For a specific process of the payment procedure, references can be made to a related technology. Details are omitted here for simplicity. The server can also feed back the payment result information to the payment system, for example, a device with a display function such as a POS machine, or a cash register of a merchant.

In actual applications, if the tag information obtained by the first device includes information about the counterparty or further includes information such as a transaction amount, the first device can send a payment request including information about both parties in the transaction to the server, and the server can also process the transaction based on the payment request sent by the first device. The information about both parties in the transaction can include account information or identification information of both parties in the transaction, can further include transaction amount information, and can further include type information or specific product name information of a traded product, etc. In this way, the server can execute a transaction processing procedure based on necessary information needed for a transaction service, obtain payment result information, and can further feed back the result information to both parties in the transaction. In this way, the server does not need to send the user transaction identification information of the first device to the service system, and does not need to generate the transaction identification information. This can simplify the payment processing procedure, and improve payment efficiency.

In actual applications, to improve payment security, the server can further send information about the transaction to be conducted to the first device before performing related steps of resource transfer for both parties in the transaction, so that the server can perform the related steps of resource transfer for both parties in the transaction after the first device automatically confirms the information about the transaction based on user authorization or the user manually confirms the information about the transaction. Optionally, the server in the embodiment of this specification can further perform the following steps: sending payment link information to the first device, where the payment link information includes identification information that represents payment information to be confirmed; and obtaining payment confirmation information provided by the first device, so that the server executes a corresponding payment processing procedure after the payment confirmation information.

Optionally, the corresponding first device can perform the following steps: obtaining payment link information provided by the server, where the payment link information includes identification information that represents payment information to be confirmed; and sending payment confirmation information to the server based on the payment link information, so that the server executes a corresponding payment processing procedure after obtaining the payment confirmation information.

The payment information to be confirmed can include information about an amount to be paid, information about the counterparty, etc. The payment link information can include a character string representing the payment information to be confirmed or a character string obtained by processing, based on a predetermined rule, the payment information to be confirmed. In an implementation, the payment link information can be information in a URL format, or a character string in another format that can be recognized by the first device. In actual applications, the target application in the first device can send the payment confirmation information to the server based on the payment link information. On the basis of user authorization, if the user does not need to perform confirmation, the server does not need to send the payment link information to the first device.

In an implementation, after obtaining the payment link information, the first device can further display a payment confirmation page for the user to manually confirm the payment information. Optionally, the first device in the embodiment of this specification can further perform the following steps: displaying a payment confirmation page based on the payment link information, where the payment confirmation page includes the payment information to be confirmed; and sending the payment confirmation information to the server based on a fourth operation of the user on the payment confirmation page.

The payment confirmation information is sent by the first device based on the fourth operation of the user on the payment confirmation page displayed based on the payment link information.

FIG. 9 is a schematic diagram illustrating a payment confirmation page, according to an embodiment of this specification. As shown in FIG. 9, the payment confirmation page can include an area 902 used to display payment information, can specifically display payment amount information, and can further display information such as a payment method, a transaction party, and a transaction time. The payment page can further include an operation control 906. If the user taps on the control, it can indicate that the user agrees to make payment, and the mobile terminal device can generate confirmation information. In actual applications, the operation control can be a control used to confirm payment, or can be a control used to cancel payment. If the user does not tap on the control that indicates cancellation of payment within a predetermined time period, it can also indicate that the user agrees to make payment, and the mobile terminal device can also generate confirmation information, to perform a subsequent procedure. As shown in FIG. 9, the payment confirmation page can further include description information 906 for NFC payment, to help the user understand an advantage or a use method of NFC payment.

In actual applications, the payment amount information included on the payment confirmation page can be a transaction amount determined based on an actual transaction by a merchant that uses the second device, or can be entered by the user of the first device, for example, can be entered on the payment confirmation page, or can be entered on a page that is used for the user to enter an amount and that is displayed before the payment confirmation page is displayed.

The fourth operation can represent an operation of the user to confirm payment, and can be a substantive operation or a non-substantive operation. For example, a tap performed by the user on the confirmation control shown in FIG. 9, or no tap performed on a control for cancellation of payment within predetermined duration can represent an operation of the user to confirm payment.

The operations in the embodiments of this specification can be operations performed through the body of the user, or operations performed based on voice, eye movement, etc. A specific operation type is not specifically limited here.

In actual applications, to improve payment efficiency, the first device can alternatively not display the payment confirmation page in a case in which the user satisfies some predetermined conditions, for example, a payment environment is secure, and the user has authorized the first device or the server to confirm payment information. Optionally, the first device in the embodiment of this specification can further perform the following step: determining whether the user of the first device satisfies a predetermined payment condition, where the predetermined payment condition represents a condition under which quick payment is capable of being performed.

If the user satisfies the predetermined payment condition, the first device can skip displaying the payment confirmation page; and if the user does not satisfy the predetermined payment condition, the first device displays the payment confirmation page.

The displaying a payment confirmation page can specifically include: displaying the payment confirmation page if the user does not satisfy the predetermined payment condition.

The displaying a payment result page can specifically include: displaying the payment result page if the user satisfies the predetermined payment condition. That is, the payment confirmation page can alternatively not be displayed before the payment result page is displayed.

In an implementation, the predetermined payment condition can include at least one of the following: use of an instant payment function is authorized, the user is a highly active user who uses the target application, and use of a password-free payment function is authorized.

The instant payment function can represent a confirmation-free payment function. For example, the above-described pages such as the payment confirmation page that need the user to confirm information do not need to be displayed before the transaction result page, and a related operation that the user confirms payment does not need to be performed or is reduced. This is an extremely quick payment method. In actual applications, the user can enable the instant payment function on a related setting page of the target application. If the user has provided authorization to use the instant payment function, it can be determined that the user satisfies the predetermined payment condition. When the user makes payment through NFC, the payment confirmation page does not need to be displayed.

The highly active user can represent a user whose degree of activity of using the payment application is greater than or equal to a predetermined threshold. In actual applications, a degree of activity of the user can be calculated based on factors such as duration and a frequency of logging in to the payment application by the user. The degree of activity of the user can alternatively be determined based on a frequency at which the user uses the payment application to perform code scanning for payment or output a payment code. A quick payment processing procedure can be provided for the highly active user. For example, the payment page does not need to be displayed.

In actual applications, for the highly active user, in the payment application of the user, the instant payment function can also be in a default enabled state, and a corresponding payment procedure can be provided for the user based on a state of the instant payment function.

The password-free payment function can represent a function of making payment without entering a password, and payment can be made by using biometric features such as a fingerprint, a face, a voiceprint, and an iris as verification information. Alternatively, the server can be authorized to automatically conduct a transaction for the user without needing the user to enter a password or biometric feature information for verification.

Considering that in actual applications, after obtaining the NFC tag information, the first device needs to parse the tag information before invoking the target application and displaying the member login page. Before displaying the member login page, the first device needs to execute some procedures. To improve user experience, the first device can further display a transition page after obtaining the NFC tag information. Optionally, before displaying the member login result page, the first device in the embodiment of this specification can further perform the following step: displaying a login response page, where the login response page includes prompt information indicating that login is being performed.

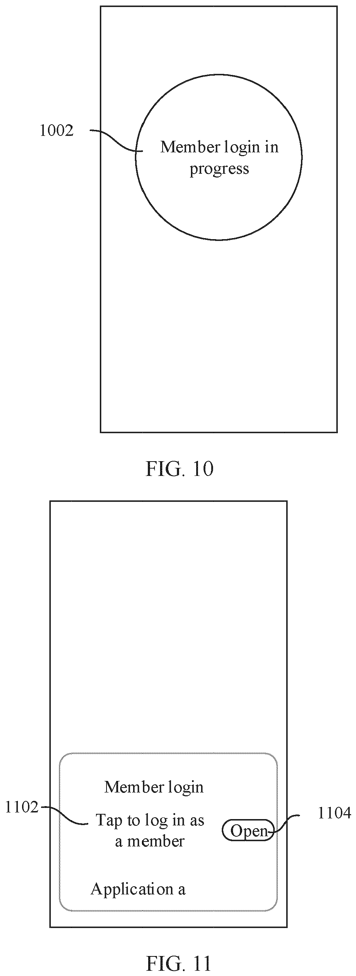

FIG. 10 is a schematic diagram illustrating a login response page, according to an embodiment of this specification. As shown in FIG. 10, the login response page can include prompt information 1002 indicating that login is being performed. In actual applications, the login response page can further include information such as a target application identifier and a merchant identifier. The login response page can be generated locally by the first device, or can be generated based on information fed back by the server.

In an implementation, the server can further send login response page information to the first device, so that the first device displays the login response page.

After obtaining the member login request sent by the first device, the server can first send the login response page information to the first device, and after the login procedure is completed, send the login result information to the first device.

To ensure security of user information, before invoking the target application in the first device, the first device can further perform the following step: displaying a member prompt page, where the member prompt page includes information that prompts a user to log in as a member or prompts a user to make payment through a member.

The invoking the target application in the first device can specifically include: obtaining a second operation of the user on the member prompt page, where the second operation represents agreement to use the target application to log in as a member; and invoking the target application in the first device based on the second operation.

FIG. 11 is a schematic diagram illustrating a member prompt page, according to an embodiment of this specification. As shown in FIG. 11, the page can include information 1102 prompting the user to log in as a member, such as words "Tap to log in as a member". The prompt information included on the page can be information prompting the user to make payment through a member, such as information about words "Tap to make payment through a member".

As shown in FIG. 11, the member prompt page can further include an operation control 1104. If the user performs an operation on the control to agree to use the target application to log in as a member, the first device can invoke the target application. The operation on the member prompt page can be a substantive operation or a non-substantive operation, and is not specifically limited here. The member prompt page can further include identification information of the target application, for example, information such as a name and a logo.

If the target application is not installed in the mobile terminal device, or the target application is installed in the mobile terminal device but the user does not register to use the target application, after the user performs an operation on the operation control 1102, a download page used to download a client device of the target application or a page used to perform registration to use the target application can be displayed through redirection, so that the user can use the target application to log in as a member or make payment after logging in as a member.

In actual applications, the member prompt page can further include a download control used to download the client device of the target application. If the user taps on the control, the first device can implement redirection to display the download page used to download the client device of the target application, or the first device can download the target application from an application store. The first device can further display prompt information indicating download progress. Alternatively, background download or installation is performed, and after the download or installation is completed, prompt information indicating download or installation completion is displayed.

In an implementation, if the first device has an iOS system, after the first device approaches the NFC tag and obtains the tag information, the first device can display the member prompt page. The member prompt page can be displayed in a form of a clips card or a notification bar. If the user performs an operation that represents agreement to start the target application on the member prompt page, the first device can invoke the target application. The first device is capable of executing a member login procedure and a member payment procedure based on the started target application, such as displaying the member login page. In actual applications, in a process in which the user performs an operation on the member prompt page, the first device can collect biometric feature information of the user as payment verification information. If the user submits, based on the member prompt page, information indicating confirmation of member login and payment, it can indicate that the user confirms the payment information and the payment confirmation page does not need to be displayed. Certainly, the payment confirmation page can alternatively be displayed based on actual needs. If the user does not enable the instant payment function or does not satisfy the above-mentioned predetermined payment condition, the first device can alternatively display the payment confirmation page.

In an implementation, if the first device has an Android system, after the first device approaches the NFC tag and obtains the tag information, if the target application is installed in the first device, the target application can be started, and the member login page is displayed.

In actual applications, it takes some time for the server to process a transaction service corresponding to the first device, such as 0.5 seconds, 1 second, or 2 seconds. To improve user experience, before displaying the payment result page, the first device can further display a payment response page, which can be used to prompt the user that payment is in progress.

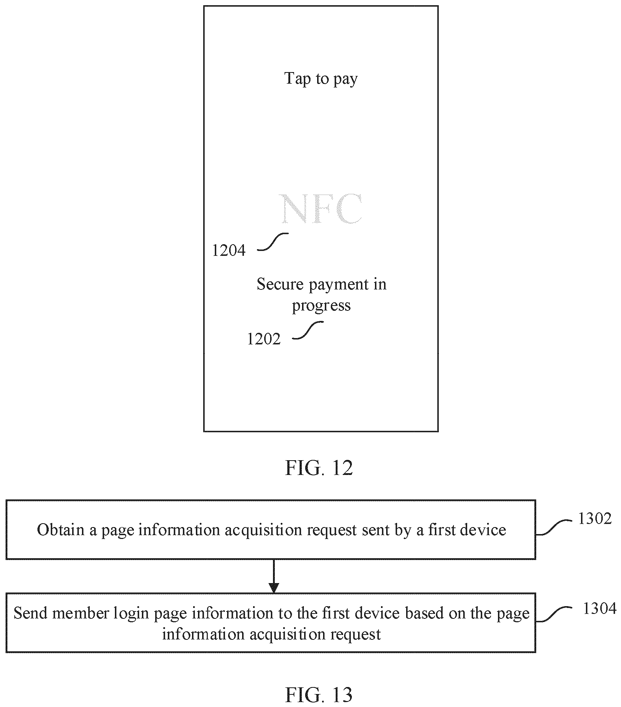

FIG. 12 is a schematic diagram illustrating a payment response page, according to an embodiment of this specification. As shown in FIG. 12, the payment response page can include prompt information 1202 indicating that payment is being made; can further include prompt information 1204 such as a word "NFC" indicating that a near field communication way is used for payment; and can further include related description information, etc. of near field communication for payment, for example, words "Tap to pay" shown in FIG. 12.

The payment response page can be generated locally by the first device, or can be generated based on response information fed back by the server. The payment response page can further include progress information of a payment process, such as progress information in a percentage form, a progress bar form, etc.

It can be understood that each display page in the embodiments of this specification can be a pop-up page, an H5 page, an application page in the target application, a web page, or a page in another form, and is not specifically limited here. For example, the above-mentioned member authorization and login page can be displayed in a form of a pop-up window on the member response page, and the above-mentioned member prompt page can be displayed in a form of a lightweight application page, a notification page, etc.

In actual applications, to improve user experience and ensure user information security, the tag information in the NFC tag can only be read once. After the NFC tag information in the NFC tag is read, the tag information can be deleted from the NFC tag, or new tag information can be recorded in the NFC tag. Certainly, the tag information can alternatively be set to be reusable based on actual service needs, and there is no specific limitation here.

In the embodiments of this specification, the target application can be an application with a payment function or an application of another type. In at least one embodiment of this specification, when the user needs to use member payment, the user can use the first device to approach the NFC tag of the second device to obtain the tag information, and then use the target application to complete member login and payment. The user can complete member login and payment after using the first device to abut or touch the second device, and the entire process does not need too many operations. If the user has not registered as a member yet, the first device can display the member login and authorization page. After the user authorizes and agrees to member registration, the first device and the server can register the user as a member and make payment based on authorization of the user. In the entire process, the user can perform an operation only on the member login and authorization page, and does not need to perform too many operations, so that operation steps of the user can be simplified.

In actual applications, to enable the user to make payment with perception, pages such as the payment confirmation page can alternatively be displayed. It can be understood that various display pages provided in this specification can be set and displayed based on actual needs, as long as service processing logic is complied with.

In the embodiments of this specification, if the second device has a display screen, the server can also send the login result information, the payment result information, etc. to the second device. The second device can also display information indicating a login result, information indicating a payment result, etc. Before displaying the login result information and the payment result information, the second device can also display information indicating that the user is logging in as a member, information indicating that the user is making payment, etc. The second device can also reflect information in various service processing stages by using a form such as a voice broadcast or a prompt sound. Display information in the second device can be set based on actual needs, and is not specifically limited here.

In actual applications, the first device can display the above-mentioned display pages in an unlocked state. For example, the user can first unlock the first device, and then move the first device in proximity to the second device. Alternatively, the user can first move the first device in proximity to the second device, and then unlock the first device in an approaching process or in an approached state.

If a system program of the first device can accurately parse content of the tag information, for example, when the tag information is in a link in an https form, the system program can access the link information and display a corresponding display page. The first device can also display the above-mentioned display pages in a locked state to complete operations such as member login or payment.

Based on the same idea, the embodiments of this specification further provide a method that is performed by a server corresponding to the above-mentioned first device. FIG. 13 is a schematic flowchart illustrating a method for displaying a member login page, according to an embodiment of this specification. As shown in FIG. 13, the method can include the following steps:
Step 1302: Obtain a page information acquisition request sent by a first device.

The page information acquisition request is generated by the first device based on tag information of an NFC tag of a second device obtained by way of near field communication, and the tag information includes first information for invoking a target application and second information for executing a member login procedure.

Step 1304: Send member login page information to the first device based on the page information acquisition request.

The first device can display a member login page.

In actual applications, the tag information in the second device can be generated by a server based on actual needs. Specifically, the following can be included: obtaining a tag information acquisition request sent by the second device; based on the tag information acquisition request, generating tag information to be burned to the NFC tag of the second device, where the tag information includes first information for invoking a target application and second information for executing a member login procedure; and sending the tag information to the second device, where the second device is capable of burning the tag information to the NFC tag, so that the first device is capable of obtaining the tag information by way of near field communication and executing the member login procedure.

The tag information acquisition request can be sent by a merchant or a user after determining that the user needs to log in as a member. For example, the second device can be connected to an operable cash register system or device, and the second device includes an operable control. If a cashier taps on a control for member payment in a cash register terminal device, or the user taps on a control for member login or payment in a self-service payment device, the second device or the cash register system can send a tag information acquisition request to the server. The second device can be part of the cash register system or the self-service payment device, or can be a device connected to the cash register system or the self-service payment device.

The server can further feed back tag information to the second device; or the server can feed back tag information to the cash register system, and then the cash register system sends the tag information to the second device. The second device has a capability to burn NFC tag information, and can burn the obtained tag information to the NFC tag. In this way, the user of the first device can log in as a member in an NFC manner.

For specific related steps performed by the server for member login or payment, references can be made to the content in the above-mentioned embodiments. Details are omitted here for simplicity.

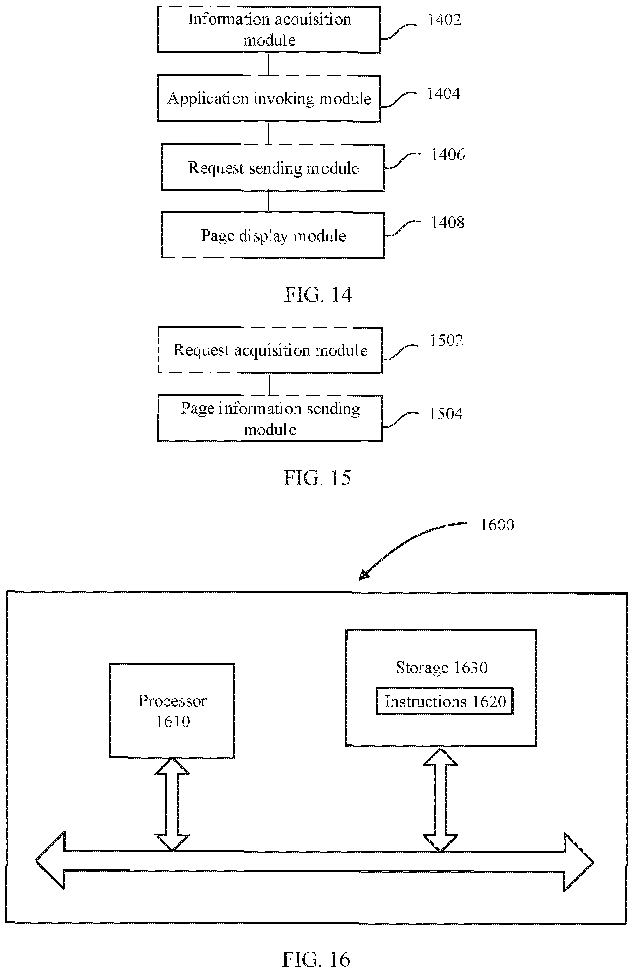

Based on the same idea, the embodiments of this specification further provide an apparatus corresponding to the above-mentioned method. FIG. 14 is a schematic diagram illustrating a structure of an apparatus for displaying a member login page corresponding to FIG. 2, according to an embodiment of this specification. As shown in FIG. 14, the apparatus can include: an information acquisition module 1402, configured to obtain tag information of an NFC tag of a second device by way of near field communication, where the tag information includes first information for invoking a target application and second information for triggering a member login procedure; an application invoking module 1404, configured to invoke the target application in the first device based on the first information; a request sending module 1406, configured to use the target application to send a page information acquisition request to a server based on the second information; and a page display module 1408, configured to obtain member login page information fed back by the server, and display a member login page.

Based on the apparatus in FIG. 14, the embodiments of this specification further provide some specific implementations of the apparatus, which are described below.

Optionally, the page display module can be specifically configured to: obtain member login result information fed back by the server, and display a member login result page, where the member login result information is page information fed back by the server after determining that a user of the first device is a member of a target object.

Optionally, the page display module can be specifically configured to: obtain member authorization and login page information fed back by the server, and display a member authorization and login page, where the member authorization and login page information is page information fed back by the server after determining that a user of the first device is not a member of a target object.

Optionally, the page display module can include a first page display unit, which can be configured to: obtain a first operation of the user on a first control of the member authorization and login page, where the first operation is an operation that represents agreement of the user to become a member of the target object; send a member login request to the server based on the first operation; and obtain member login result information fed back by the server, and display a member login result page.

Optionally, the first operation can further represent an operation of the user to make payment in a member payment method, and the request sending module can be further configured to: send a first payment trigger request to the server, so that the server executes a corresponding payment processing procedure.

Optionally, the page display module can include a second page display unit, which can be configured to: obtain a second operation of the user on a second control of the member authorization and login page, where the second operation is an operation that represents agreement of the user to make payment in a non-member payment method; and send a second payment trigger request to the server, so that the server executes a corresponding payment processing procedure.

Optionally, the page display module can include a third page display unit, which can be configured to: obtain payment result information fed back by the server; and display a payment result page based on the payment result information.

Optionally, the apparatus can further include a payment processing module, which can include: a link acquisition unit, configured to obtain payment link information provided by the server, where the payment link information includes identification information that represents payment information to be confirmed; and a payment confirmation unit, configured to send payment confirmation information to the server based on the payment link information, so that the server executes a corresponding payment processing procedure after obtaining the payment confirmation information.

Optionally, the payment processing module can further include: a page display unit, configured to display a payment confirmation page based on the payment link information, where the payment confirmation page includes the payment information to be confirmed, where the above-mentioned payment confirmation unit can be specifically configured to send the payment confirmation information to the server based on a fourth operation of the user on the payment confirmation page.

Optionally, the payment processing module can further include: a condition determining unit, configured to determine whether the user of the first device satisfies a predetermined payment condition, where the predetermined payment condition represents a condition under which quick payment is capable of being performed, where the above-mentioned page display unit can be specifically configured to display the payment confirmation page if the user does not satisfy the predetermined payment condition; and the displaying a payment result page can specifically include: displaying the payment result page if the user satisfies the predetermined payment condition.

Optionally, the page display module further includes a fourth page display unit, which can be configured to: display a login response page, where the login response page includes prompt information indicating that login is being performed.

Optionally, the page display module further includes a fifth page display unit, which can be configured to: display a member prompt page, where the member prompt page includes information that prompts a user to log in as a member or prompts a user to make payment through a member; and the above-mentioned application invoking module can be specifically configured to: obtain a second operation of the user on the member prompt page, where the second operation represents agreement to use the target application to log in as a member; and invoke the target application in the first device based on the second operation.

Optionally, the request sending module can be specifically configured to: obtain scenario parameter information from the second information; generate a page information acquisition request based on the scenario parameter information; and send the page information acquisition request to the server.

Based on the same idea, FIG. 15 is a schematic diagram illustrating a structure of an apparatus for displaying a member login page corresponding to FIG. 13, according to an embodiment of this specification. As shown in FIG. 15, the apparatus can include: a request acquisition module 1502, configured to obtain a page information acquisition request sent by a first device, where the page information acquisition request is generated by the first device based on tag information of an NFC tag of a second device obtained by way of near field communication, and the tag information includes first information for invoking a target application and second information for executing a member login procedure; and a page information sending module 1504, configured to send member login page information to the first device based on the page information acquisition request, so that the first device displays a member login page.

Based on the apparatus in FIG. 15, the embodiments of this specification further provide some specific implementations of the apparatus, which are described below.

Optionally, the page information acquisition request includes user identification information of the first device; and the apparatus can further include a determining module, configured to determine, based on the user identification information, whether a user of the first device is a member of a target object, to obtain a determining result.

The above-mentioned page information sending module can include a first page information sending unit, configured to send member login result information to the first device if the determining result indicates that the user is a member of the target object, so that the first device displays a member login result page.

Optionally, the above-mentioned page information sending module can include a second page information sending unit, configured to send member authorization and login page information to the first device if the determining result indicates that the user is not a member of the target object, so that the first device displays a member authorization and login page.

Optionally, the above-mentioned page information sending module can include a third page information sending unit, configured to: obtain a member login request sent by the first device, where the member login request is generated by the first device based on a first operation of the user on a first control of the member authorization and login page, and the first operation is an operation that represents agreement of the user to become a member of the target object; and send member login result information to the first device, so that the first device displays a member login result page.

Optionally, the request acquisition module can include a first payment request acquisition unit, the first operation further represents an operation of the user to make payment in a member payment method, and the first payment request acquisition unit can be configured to: obtain a first payment trigger request sent by the first device; and based on the first payment trigger request, send first transaction information of the user to a payment system of a transaction party opposite to the first device, so that the payment system processes a payment service for the user based on the first transaction information, where the first transaction information includes member information of the user and transaction identification information that represents transaction account information of the user.

Optionally, the request acquisition module can include a second payment request acquisition unit, which can be configured to: obtain a second payment trigger request sent by the first device, where the second payment trigger request is generated by the first device based on a second operation of the user on a second control of the member authorization and login page, and the second operation is an operation that represents agreement of the user to make payment in a non-member payment method; and based on the second payment trigger request, send second transaction information of the user to a payment system associated with the second device, so that the payment system processes a payment service for the user based on the second transaction information, where the second transaction information includes transaction identification information that represents transaction account information of the user.

Optionally, the apparatus can include a transaction processing module. If the determining result indicates that the user is a member of the target object, a transaction information sending module in the transaction processing module is configured to send first transaction information of the user to a payment system associated with the second device, so that the payment system processes a payment service for the user based on the first transaction information, where the first transaction information includes member information of the user and transaction identification information that represents transaction account information of the user.

Optionally, the transaction processing module can be further configured to: obtain a payment processing request generated by the payment system based on the transaction identification information; execute a payment procedure based on the payment processing request, and obtain payment result information; and send the payment result information to the first device.

Optionally, the transaction processing module can be further configured to: send payment link information to the first device, where the payment link information includes identification information that represents payment information to be confirmed; and obtain payment confirmation information provided by the first device, so that the server executes a corresponding payment processing procedure after the payment confirmation information.

Optionally, the payment confirmation information is sent by the first device based on a fourth operation of the user on a payment confirmation page displayed based on the payment link information.

Based on the same idea, the embodiments of this specification further provide a device corresponding to the above-mentioned method.

FIG. 16 is a schematic diagram illustrating a structure of a device for displaying a member login page, according to an embodiment of this specification. As shown in FIG. 16, the device 1600 can include: at least one processor 1610; and a storage 1630 communicatively connected to the at least one processor, where the storage 1630 stores instructions 1620 executable by the at least one processor 1610, and the instructions are executed by the at least one processor 1610, so that the at least one processor 1610 is capable of performing the above-mentioned method for displaying a member login page.

Based on the same idea, the embodiments of this specification further provide a computer-readable medium corresponding to the above-mentioned method. The computer-readable medium stores computer-readable instructions, and the computer-readable instructions can be executed by a processor to implement the above-mentioned method for displaying a member login page.

The embodiments of this specification are described in a progressive way. For same or similar parts of the embodiments, mutual references can be made to the embodiments. Each embodiment focuses on a difference from other embodiments. In particular, the apparatuses and the devices are basically similar to the method embodiments, and therefore are described briefly. For related parts, references can be made to partial descriptions in the method embodiments.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer independently performs programming to "integrate" a digital system to a PLD without requesting a chip manufacturer to design and manufacture an application specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

The controller can be implemented in any suitable manner. For example, the controller can take the form of a microprocessor or a processor, and a computer-readable medium, a logic gate, a switch, an application specific integrated circuit (ASIC), a programmable logic controller, and an embedded microcontroller that store computer-readable program code (such as software or firmware) executable by the microprocessor or the processor. Examples of the controller include but are not limited to the following microcontrollers: ARC 625D, Atmel AT91SAM, Microchip PIC18F26K20, and Silicone Labs C8051F320. The storage controller can also be implemented as part of the control logic of the storage. A person skilled in the art also knows that, in addition to implementing the controller in a pure computer-readable program code manner, a method step can be logically programmed, so that the controller implements a same function in a form of a logic gate, a switch, an application specific integrated circuit, a programmable logic controller, an embedded microcontroller, etc. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, when this application is implemented, functions of the units can be implemented in one or more pieces of software and/or hardware.

A person skilled in the art should understand that the embodiments of this application can be provided as methods, systems, or computer program products. Therefore, this application can use a form of hardware only embodiments, software only embodiments, or embodiments with a combination of software and hardware. Moreover, a form of a computer program product that is implemented on one or more computer-usable storage media (including but not limited to a disk storage, a CD-ROM, an optical storage, etc.) that include computer-usable program code can be used in this application.

This application is described with reference to the flowcharts and/or block diagrams of the method, the device (system), and the computer program product based on the embodiments of this application. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can also be stored in a computer-readable storage that can instruct a computer or another programmable data processing device to work in a specific manner, so that the instructions stored in the computer-readable storage generate a manufactured product including an instruction apparatus, and the instruction apparatus implements a specific function in one or more procedures in the flowcharts and/or in one or more blocks in the block diagrams.

The computer program instructions can alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory may include a non-persistent storage, a random access memory (RAM), and/or a nonvolatile memory in a computer-readable medium, for example, a read-only memory (ROM) or a flash read-only memory (flash RAM). The memory is an example of the computer-readable medium.

The computer-readable medium includes a persistent and a non-persistent, a removable and a non-removable medium, which implement information storage by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by the computing device. Based on the definition in the present specification, the computer-readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, an element preceded by "includes a ..." does not preclude the existence of additional identical elements in the process, method, product, or device that includes the element.

A person skilled in the art should understand that the embodiments of this application can be provided as methods, systems, or computer program products. Therefore, this application can use a form of hardware only embodiments, software only embodiments, or embodiments with a combination of software and hardware. Moreover, a form of a computer program product that is implemented on one or more computer-usable storage media (including but not limited to a disk storage, a CD-ROM, an optical storage, etc.) that include computer-usable program code can be used in this application.

This application can be described in the general context of computer-executable instructions, for example, a program module. Generally, the program module includes a routine, a program, an object, a component, a data structure, etc. executing a specific task or implementing a specific abstract data type. This application can alternatively be practiced in distributed computing environments. In the distributed computing environments, tasks are executed by remote processing devices connected through a communication network. In the distributed computing environments, the program module can be located in both local and remote computer storage media including storage devices.

The above-mentioned descriptions are merely embodiments of this application, and are not intended to limit this application. A person skilled in the art can make various modifications and changes to this application. Any modification, equivalent replacement, or improvement made without departing from the spirit and principle of this application shall fall within the scope of the claims in this application.

### EXAMPLES

1. A method for displaying a member login page, comprising:
   obtaining, by a first device, tag information of an NFC tag of a second device by way of near field communication, wherein the tag information comprises first information for invoking a target application and second information for triggering a member login procedure;
   invoking the target application in the first device based on the first information;
   using the target application to send a page information acquisition request to a server based on the second information; and
   obtaining member login page information fed back by the server, and displaying a member login page.
2. The method according to example 1, wherein the obtaining member login page information fed back by the server, and displaying a member login page specifically comprises:
   obtaining member login result information fed back by the server, and displaying a member login result page, wherein the member login result information is page information fed back by the server after determining that a user of the first device is a member of a target object.
3. The method according to example 1, wherein the obtaining member login page information fed back by the server, and displaying a member login page specifically comprises:
   obtaining member authorization and login page information fed back by the server, and displaying a member authorization and login page, wherein the member authorization and login page information is page information fed back by the server after determining that a user of the first device is not a member of a target object.
4. The method according to example 3, wherein the method further comprises:
   obtaining a first operation of the user on a first control of the member authorization and login page, wherein the first operation is an operation that represents agreement of the user to become a member of the target object;
   sending a member login request to the server based on the first operation; and
   obtaining member login result information fed back by the server, and displaying a member login result page.
5. The method according to example 4, wherein the first operation further represents an operation of the user to make payment in a member payment method, and the method further comprises:
   sending a first payment trigger request to the server, so that the server executes a corresponding payment processing procedure.
6. The method according to example 3, wherein the method further comprises:
   obtaining a second operation of the user on a second control of the member authorization and login page, wherein the second operation is an operation that represents agreement of the user to make payment in a non-member payment method; and
   sending a second payment trigger request to the server, so that the server executes a corresponding payment processing procedure.
7. The method according to any one of examples 2, 5, and 6, wherein the method further comprises:
   obtaining payment result information fed back by the server; and
   displaying a payment result page based on the payment result information.
8. The method according to example 7, before the obtaining payment result information fed back by the server, further comprising:
   obtaining payment link information provided by the server, wherein the payment link information comprises identification information that represents payment information to be confirmed; and
   sending payment confirmation information to the server based on the payment link information, so that the server executes a corresponding payment processing procedure after obtaining the payment confirmation information.
9. The method according to example 8, wherein the sending payment confirmation information to the server based on the payment link information specifically comprises:
   displaying a payment confirmation page based on the payment link information, wherein the payment confirmation page comprises the payment information to be confirmed; and
   sending the payment confirmation information to the server based on a fourth operation of the user on the payment confirmation page.
10. The method according to example 9, wherein the displaying a payment confirmation page based on the payment link information specifically comprises:
   determining whether the user of the first device satisfies a predetermined payment condition, wherein the predetermined payment condition represents a condition under which quick payment is capable of being performed, wherein
   the displaying a payment confirmation page specifically comprises:
      displaying the payment confirmation page if the user does not satisfy the predetermined payment condition; and
      the displaying a payment result page specifically comprises:
         displaying the payment result page if the user satisfies the predetermined payment condition.
11. The method according to example 2 or 4, wherein
   before the displaying a member login result page, further comprising:
   displaying a login response page, wherein the login response page comprises prompt information indicating that login is being performed.
12. The method according to example 1, before the invoking the target application in the first device, further comprising:
   displaying a member prompt page, wherein the member prompt page comprises information that prompts a user to log in as a member or prompts a user to make payment through a member; and
   the invoking the target application in the first device specifically comprises:
      obtaining a second operation of the user on the member prompt page, wherein the second operation represents agreement to use the target application to log in as a member; and
      invoking the target application in the first device based on the second operation.
13. The method according to example 1, wherein the using the target application to send a page information acquisition request to a server based on the second information specifically comprises:
   obtaining scenario parameter information from the second information;
   generating a page information acquisition request based on the scenario parameter information; and
   sending the page information acquisition request to the server.
14. A method for displaying a member login page, comprising:
   obtaining a page information acquisition request sent by a first device, wherein the page information acquisition request is generated by the first device based on tag information of an NFC tag of a second device obtained by way of near field communication, and the tag information comprises first information for invoking a target application and second information for executing a member login procedure; and
   sending member login page information to the first device based on the page information acquisition request, so that the first device displays a member login page.
15. The method according to example 14, wherein
   the page information acquisition request comprises user identification information of the first device, and the method further comprises:
   determining, based on the user identification information, whether a user of the first device is a member of a target object, to obtain a determining result; and
   the sending member login page information to the first device specifically comprises:
      sending member login result information to the first device if the determining result indicates that the user is a member of the target object, so that the first device displays a member login result page.
16. The method according to example 15, wherein the method further comprises:
   sending member authorization and login page information to the first device if the determining result indicates that the user is not a member of the target object, so that the first device displays a member authorization and login page.
17. The method according to example 16, wherein the method further comprises:
   obtaining a member login request sent by the first device, wherein the member login request is generated by the first device based on a first operation of the user on a first control of the member authorization and login page, and the first operation is an operation that represents agreement of the user to become a member of the target object; and
   sending member login result information to the first device, so that the first device displays a member login result page.
18. The method according to example 17, wherein the first operation further represents an operation of the user to make payment in a member payment method, and the method further comprises:
   obtaining a first payment trigger request sent by the first device; and
   based on the first payment trigger request, sending first transaction information of the user to a payment system of a transaction party opposite to the first device, so that the payment system processes a payment service for the user based on the first transaction information, wherein the first transaction information comprises member information of the user and transaction identification information that represents transaction account information of the user.
19. The method according to example 16, wherein the method further comprises:
   obtaining a second payment trigger request sent by the first device, wherein the second payment trigger request is generated by the first device based on a second operation of the user on a second control of the member authorization and login page, and the second operation is an operation that represents agreement of the user to make payment in a non-member payment method; and
   based on the second payment trigger request, sending second transaction information of the user to a payment system associated with the second device, so that the payment system processes a payment service for the user based on the second transaction information, wherein the second transaction information comprises transaction identification information that represents transaction account information of the user.
20. The method according to example 15, wherein if the determining result indicates that the user is a member of the target object, the method further comprises:
   sending first transaction information of the user to a payment system associated with the second device, so that the payment system processes a payment service for the user based on the first transaction information, wherein the first transaction information comprises member information of the user and transaction identification information that represents transaction account information of the user.
21. The method according to example 18, 19, or 20, wherein the method further comprises:
   obtaining a payment processing request generated by the payment system based on the transaction identification information;
   executing a payment procedure based on the payment processing request, and obtaining payment result information; and
   sending the payment result information to the first device.
22. The method according to example 21, before the obtaining a payment processing request generated by the payment system based on the transaction identification information, further comprising:
   sending payment link information to the first device, wherein the payment link information comprises identification information that represents payment information to be confirmed; and obtaining payment confirmation information provided by the first device, so that the server executes a corresponding payment processing procedure after the payment confirmation information.
23. The method according to example 22, wherein the payment confirmation information is sent by the first device based on a fourth operation of the user on a payment confirmation page displayed based on the payment link information.
24. An apparatus for displaying a member login page, comprising:
   an information acquisition module, configured to obtain tag information of an NFC tag of a second device by way of near field communication, wherein the tag information comprises first information for invoking a target application and second information for triggering a member login procedure;
   an application invoking module, configured to invoke the target application in the first device based on the first information;
   a request sending module, configured to use the target application to send a page information acquisition request to a server based on the second information; and
   a page display module, configured to obtain member login page information fed back by the server, and display a member login page.
25. An apparatus for displaying a member login page, comprising:
   a request acquisition module, configured to obtain a page information acquisition request sent by a first device, wherein the page information acquisition request is generated by the first device based on tag information of an NFC tag of a second device obtained by way of near field communication, and the tag information comprises first information for invoking a target application and second information for executing a member login procedure; and
   a page information sending module, configured to send member login page information to the first device based on the page information acquisition request, so that the first device displays a member login page.
26. A device for displaying a member login page, comprising:
   at least one processor; and
   a storage communicatively connected to the at least one processor, wherein
   the storage stores instructions executable by the at least one processor, and the instructions are executed by the at least one processor, so that the at least one processor is capable of performing the method for displaying a member login page according to any one of examples 1 to 23.
27. A computer-readable medium, storing computer-readable instructions, wherein the computer-readable instructions can be executed by a processor to implement the method for displaying a member login page according to any one of examples 1 to 23.

## Claims

1. A method for displaying a member login page, the method comprising:
obtaining (202), by a first device, tag information of a near field communication, NFC, tag of a second device by way of near field communication, wherein the tag information comprises first information for invoking a target application and second information for triggering a member login procedure;
invoking (204) the target application in the first device based on the first information;
using (206) the target application to send a page information acquisition request to a server based on the second information; and
obtaining (208) member login page information fed back by the server, and displaying a member login page.

2. The method according to claim 1, wherein obtaining (208) member login page information fed back by the server, and displaying a member login page comprises:
obtaining member login result information fed back by the server, and displaying a member login result page, wherein the member login result information is page information fed back by the server after determining that a user of the first device is a member of a target object; optionally
wherein the method further comprises:
obtaining payment result information fed back by the server; and
displaying a payment result page based on the payment result information.

3. The method according to claim 1, wherein obtaining (208) member login page information fed back by the server, and displaying a member login page comprises:
obtaining member authorization and login page information fed back by the server, and displaying a member authorization and login page, wherein the member authorization and login page information is page information fed back by the server after determining that a user of the first device is not a member of a target object.

4. The method according to claim 3, wherein the method further comprises:
obtaining a first operation of the user on a first control of the member authorization and login page, wherein the first operation is an operation that represents agreement of the user to become a member of the target object;
sending a member login request to the server based on the first operation; and
obtaining member login result information fed back by the server, and displaying a member login result page; optionally
wherein the first operation further represents an operation of the user to make payment in a member payment method, and the method further comprises:
sending a first payment trigger request to the server, so that the server executes a corresponding payment processing procedure; or
wherein the method further comprises:
obtaining a second operation of the user on a second control of the member authorization and login page, wherein the second operation is an operation that represents agreement of the user to make payment in a non-member payment method; and
sending a second payment trigger request to the server, so that the server executes a corresponding payment processing procedure; optionally
wherein the method further comprises:
obtaining payment result information fed back by the server; and
displaying a payment result page based on the payment result information.

5. The method according to any one of claims 2 or 4, wherein, before obtaining payment result information fed back by the server, further comprising:
obtaining payment link information provided by the server, wherein the payment link information comprises identification information that represents payment information to be confirmed; and
sending payment confirmation information to the server based on the payment link information, so that the server executes a corresponding payment processing procedure after obtaining the payment confirmation information; optionally
wherein the sending payment confirmation information to the server based on the payment link information comprises:
displaying a payment confirmation page based on the payment link information, wherein the payment confirmation page comprises the payment information to be confirmed; and
sending the payment confirmation information to the server based on a fourth operation of the user on the payment confirmation page; further optionally
wherein the displaying a payment confirmation page based on the payment link information comprises:
determining whether the user of the first device satisfies a predetermined payment condition, wherein the predetermined payment condition represents a condition under which quick payment is capable of being performed, wherein
the displaying a payment confirmation page comprises:
displaying the payment confirmation page if the user does not satisfy the predetermined payment condition; and
the displaying a payment result page comprises:
displaying the payment result page if the user satisfies the predetermined payment condition.

6. The method according to any one of claims 2 or 4, wherein, before displaying a member login result page, the method further comprises:
displaying a login response page, wherein the login response page comprises prompt information indicating that login is being performed.

7. The method according to any one of claims 1 to 6, wherein, before invoking (204) the target application in the first device, the method further comprises:
displaying a member prompt page, wherein the member prompt page comprises information that prompts a user to log in as a member or prompts a user to make payment through a member; and
invoking the target application in the first device comprises:
obtaining a second operation of the user on the member prompt page, wherein the second operation represents agreement to use the target application to log in as a member; and
invoking the target application in the first device based on the second operation; and/or
wherein using (206) the target application to send a page information acquisition request to a server based on the second information comprises:
obtaining scenario parameter information from the second information;
generating a page information acquisition request based on the scenario parameter information; and
sending the page information acquisition request to the server.

8. A method for displaying a member login page, the method comprising:
obtaining (1302) a page information acquisition request sent by a first device, wherein the page information acquisition request is generated by the first device based on tag information of an NFC tag of a second device obtained by way of near field communication, and the tag information comprises first information for invoking a target application and second information for executing a member login procedure; and
sending (1304) member login page information to the first device based on the page information acquisition request, so that the first device displays a member login page.

9. The method according to claim 8, wherein
the page information acquisition request comprises user identification information of the first device, and the method further comprises:
determining, based on the user identification information, whether a user of the first device is a member of a target object, to obtain a determining result; and
sending (1304) member login page information to the first device comprises:
sending member login result information to the first device if the determining result indicates that the user is a member of the target object, so that the first device displays a member login result page.

10. The method according to claim 9, wherein the method further comprises:
sending member authorization and login page information to the first device if the determining result indicates that the user is not a member of the target object, so that the first device displays a member authorization and login page.

11. The method according to claim 10, wherein the method further comprises:
obtaining a member login request sent by the first device, wherein the member login request is generated by the first device based on a first operation of the user on a first control of the member authorization and login page, and the first operation is an operation that represents agreement of the user to become a member of the target object; and
sending member login result information to the first device, so that the first device displays a member login result page; optionally
wherein the first operation further represents an operation of the user to make payment in a member payment method, and the method further comprises:
obtaining a first payment trigger request sent by the first device; and
based on the first payment trigger request, sending first transaction information of the user to a payment system of a transaction party opposite to the first device, so that the payment system processes a payment service for the user based on the first transaction information, wherein the first transaction information comprises member information of the user and transaction identification information that represents transaction account information of the user; or
wherein the method further comprises:
obtaining a second payment trigger request sent by the first device, wherein the second payment trigger request is generated by the first device based on a second operation of the user on a second control of the member authorization and login page, and the second operation is an operation that represents agreement of the user to make payment in a non-member payment method; and
based on the second payment trigger request, sending second transaction information of the user to a payment system associated with the second device, so that the payment system processes a payment service for the user based on the second transaction information, wherein the second transaction information comprises transaction identification information that represents transaction account information of the user.

12. The method according to claim 9, wherein, if the determining result indicates that the user is a member of the target object, the method further comprises:
sending first transaction information of the user to a payment system associated with the second device, so that the payment system processes a payment service for the user based on the first transaction information, wherein the first transaction information comprises member information of the user and transaction identification information that represents transaction account information of the user.

13. The method according to any one of claims 11 or 12, wherein the method further comprises:
obtaining a payment processing request generated by the payment system based on the transaction identification information;
executing a payment procedure based on the payment processing request, and obtaining payment result information; and
sending the payment result information to the first device; optionally
wherein, before obtaining a payment processing request generated by the payment system based on the transaction identification information, the method further comprises:
sending payment link information to the first device, wherein the payment link information comprises identification information that represents payment information to be confirmed; and
obtaining payment confirmation information provided by the first device, so that the server executes a corresponding payment processing procedure after the payment confirmation information; further optionally
wherein the payment confirmation information is sent by the first device based on a fourth operation of the user on a payment confirmation page displayed based on the payment link information.

14. A device for displaying a member login page, comprising:
at least one processor; and
a storage communicatively connected to the at least one processor, wherein
the storage stores instructions executable by the at least one processor, and the instructions are executed by the at least one processor, so that the at least one processor is capable of performing the method for displaying a member login page according to any one of claims 1 to 13.

15. A computer-readable medium, storing computer-readable instructions, wherein the computer-readable instructions can be executed by a processor to implement the method for displaying a member login page according to any one of claims 1 to 13.
